(19) Europäisches Patentamt
European Patent Office
Office européen des brevets

(11) **EP 2 483 211 B1**

(12) **FASCICULE DE BREVET EUROPEEN**

(45) Date de publication et mention
de la délivrance du brevet:
**13.01.2016 Bulletin 2016/02**

(51) Int Cl.:
***C03B 5/04*** *(2006.01)*     ***C03B 5/182*** *(2006.01)*
***C03B 5/185*** *(2006.01)*

(21) Numéro de dépôt: **10765679.5**

(22) Date de dépôt: **28.09.2010**

(86) Numéro de dépôt international:
**PCT/IB2010/054351**

(87) Numéro de publication internationale:
**WO 2011/039698 (07.04.2011 Gazette 2011/14)**

(54) **FOUR DE VERRE, NOTAMMENT POUR VERRE CLAIR OU ULTRA-CLAIR, AVEC RÉDUCTION DE LA RECIRCULATION PRIMAIRE**

GLASOFEN, INSBESONDERE FÜR KLARES ODER ULTRAKLARES GLAS, MIT EINER REDUKTION BEI DER PRIMÄREN RÜCKFÜHRUNG

GLASS FURNACE, IN PARTICULAR FOR CLEAR OR ULTRA-CLEAR GLASS, WITH A REDUCTION IN THE PRIMARY RECIRCULATION

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **30.09.2009 FR 0904657**

(43) Date de publication de la demande:
**08.08.2012 Bulletin 2012/32**

(60) Demande divisionnaire:
**15194588.8**

(73) Titulaire: **Fives Stein
91130 Ris Orangis (FR)**

(72) Inventeurs:
• **KUHN, Wolf Stefan
91540 Fontenay Le Vicomte (FR)**
• **TABLOUL, Samir
92120 Montrouge (FR)**

(74) Mandataire: **Cabinet Armengaud Aîné
3, avenue Bugeaud
75116 Paris (FR)**

(56) Documents cités:
**FR-A- 1 045 199     FR-A1- 2 737 487
LU-A1- 77 649     US-A- 1 870 242
US-A- 2 119 948**

EP 2 483 211 B1

# Description

L'invention est relative à un four de verre à double courroie de recirculation pour le chauffage, la fusion et l'affinage de matières à vitrifier, four du genre de ceux qui comprennent :

- une entrée pour les matières premières,
- une superstructure équipée de moyens de chauffage,
- une cuve contenant un bain de verre en fusion sur lequel un tapis de matières premières flotte depuis l'entrée jusqu'à une certaine distance à l'intérieur du four,
- une sortie par laquelle est évacué le verre en fusion.

L'invention concerne plus particulièrement, mais non exclusivement, un four pour verre clair ou ultra-clair.

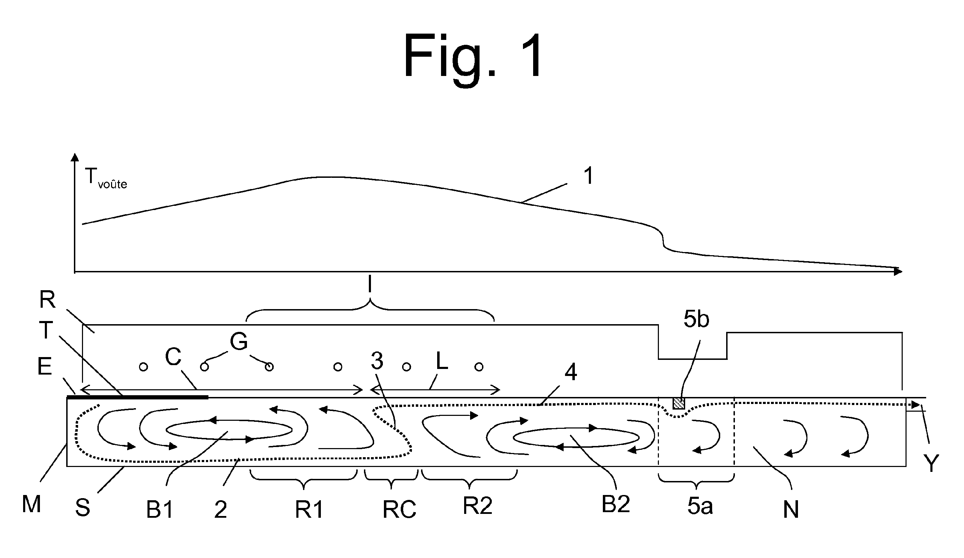

En se reportant au schéma de Fig. 1 des dessins annexés, on peut voir un four de verre flotté classique avec une entrée E pour les matières premières, une superstructure R équipée de brûleurs G, une cuve M dont la sole S supporte un bain N de verre en fusion sur lequel un tapis T de matières premières flotte depuis l'entrée, et une sortie Y. Au-dessus du four, l'évolution de la température de la face chaude de la voûte $T_{voûte}$, de la superstructure R, suivant la longueur du four, est portée en ordonnée sur Fig. 1 et est représentée par la courbe 1 dont le maximum se trouve dans la zone centrale I du four.

Deux boucles de recirculation du verre liquide B1, B2, se forment dans le bain entre une zone centrale I du four plus chaude et respectivement l'entrée E et la sortie Y à une température moindre. Selon Fig.1, la recirculation dans la boucle B1 primaire s'effectue en sens contraire d'horloge : le verre en surface s'écoule de la zone I vers l'entrée E, descend vers la sole et revient en partie basse du bain vers la zone centrale I pour remonter vers la surface. La recirculation dans la boucle secondaire B2 a lieu en sens inverse, c'est-à-dire dans le sens d'horloge. Ces deux boucles de recirculation influent sur l'écoulement principal de la tirée du four. Elles modifient la forme et la durée de passage de l'écoulement principal en fonction de leur intensité.

Le trajet de l'écoulement principal le plus court, correspondant au temps de séjour le plus faible, critique pour la qualité du verre extrait du four, est schématisé par la courbe en tirets 2 selon laquelle le verre, près de l'entrée, se déplace au voisinage de la sole S, puis remonte selon un parcours plus ou moins sinueux 3 entre les deux boucles de recirculation pour se déplacer ensuite sur une trajectoire 4 au voisinage du niveau supérieur du bain vers la sortie Y. A la remontée 3 correspond une zone de résurgence centrale RC comprise entre les deux boucles B1, B2 et leur zones de résurgences R1 et R2. Le point de retournement de l'écoulement du verre à la surface du bain marque la séparation surfacique des résurgences R1 et RC. La distance comprise entre l'entrée du four et ce point de retournement définit la longueur C représentée sur la Fig. 1, représentative de l'étendue de la boucle B1. Il peut être déterminé expérimentalement ou par simulation numérique. La qualité d'affinage du verre est déterminée par la partie initiale de la trajectoire 4. Sur cette partie initiale, le verre est maintenu à une température supérieure à la température de l'affinage (environ 1450°C pour le verre sodocalcique) pendant un certain laps de temps. Le temps de séjour dans la partie initiale de la trajectoire 4 est donc déterminant pour la qualité du verre produit. Ce temps de séjour est donné par la longueur L de la zone à température située au-dessus d'environ 1450°C pour le verre sodocalcique et par la vitesse de l'écoulement du verre. Cette vitesse d'écoulement du verre est liée à la tirée obtenue à la sortie du four et à l'intensité de la recirculation B2.

On vise donc à maximiser le temps de séjour d'"affinage" pour améliorer la qualité du verre, ou à augmenter la tirée du four à qualité constante. La prolongation du temps de séjour peut être obtenue par un ralentissement de la recirculation secondaire, ce qui permet également de diminuer la consommation du four. Ainsi, un étranglement de la largeur des fours appelé corset 5a a été prévu depuis un certain nombre d'années dans les fours à verre flotté. Dans ce corset 5a on peut utiliser, en plus, un barrage 5b refroidi à l'eau qui ralentit davantage la recirculation.

Un autre moyen connu pour prolonger le temps de séjour d'"affinage" est de décaler la zone de résurgence centrale RC en modifiant le profil longitudinal de température de la combustion. Le point le plus chaud du profil 1 est ainsi décalé vers l'entrée du four. Néanmoins, la compétition hydrodynamique des deux boucles de recirculation B1 et B2 impose des limites pour ce décalage.

Les solutions de l'état de la technique évoquées ci-dessus sont relativement satisfaisantes pour du verre ordinaire mais demeurent insuffisantes pour du verre ultra-clair.

Trois problèmes majeurs émergent lors de la fusion du verre ultra-clair:

1. dégradation de la qualité d'affinage du verre,
2. augmentation de la corrosion des parois internes de la cuve M
3. augmentation de la température à la sole, avec risque de corrosion accrue.

Pour pallier à ces problèmes, lors du passage du verre clair au verre ultra-clair dans un four à verre flotté, on est forcé de baisser la tirée de 10 à 15 %.

Pour conserver les positions de résurgence et le temps d'affinage, on se sert parfois pour du verre standard d'une rangée de bouillonneurs ou d'un mur anti-retour placés dans la zone de résurgence RC sur la sole. Or, les bouillonneurs renforcent la circulation et augmentent la température de la sole, déjà critique pour le verre ultra-clair. La corrosion constitue également un point critique pour le mur.

Pour résoudre le problème de la température élevée à la sole des fours pour le verre ultra-clair, et pour réduire cette température, on opte habituellement pour une plus grande profondeur h du bain de verre en fusion. La profondeur de la cuve est ainsi portée à environ 1.4 à 1.8 m. Mais une augmentation de la profondeur favorise la recirculation notamment pour le verre ultra-clair. Une augmentation de l'intensité de la recirculation réduit en règle générale le temps de séjour le plus court dans les fours de fusion malgré une augmentation du volume de verre. L'augmentation du coût de la cuve et une prolongation du temps de changement de teinte du verre sont d'autres désavantages liés à l'augmentation de la profondeur.

Un autre moyen connu par l'homme du métier pour limiter la température de la sole consiste à moins l'isoler thermiquement pour favoriser l'évacuation de la chaleur et limiter sa température.

On connaît les documents US-A-1870242, US-A-2119948 et LU-A-77649 qui décrivent tous des fours. Les documents US-A-1870242 et US-A-2119948 n'enseignent pas de configuration d'un four produisant deux boucles de recirculation. Aucun de ces documents ne divulgue de four présentant une sole inclinée de manière discontinue ni ne vise à raccourcir l'étendue de la première boucle de recirculation.

L'invention a pour but, surtout, de fournir un four de verre à double boucle de recirculation qui ne présente plus ou à un degré moindre les inconvénients rappelés ci-dessus et qui, notamment, permet une qualité d'affinage élevée, non seulement pour le verre ultra-clair mais aussi pour le verre clair et ordinaire.

Selon un aspect de l'invention, il est proposé l'utilisation d'un four de verre du genre défini précédemment, dans lequel le four, la cuve, l'entrée, la sortie et les moyens de chauffage sont configurés pour que deux boucles de recirculation du verre en fusion se forment dans le bain entre une zone centrale du four plus chaude et respectivement l'entrée et la sortie à une température moindre, caractérisée en ce que l'utilisation comporte un moyen de ralentissement du débit du verre en fusion dans la boucle de recirculation primaire propre à raccourcir son étendue.

Selon un autre aspect de l'invention, il est proposé un four de verre du genre défini précédemment, le four, la cuve, l'entrée, la sortie et les moyens étant configurés pour que deux boucles de recirculation du verre en fusion, respectivement primaire et secondaire, se forment dans le bain entre une zone centrale du four plus chaude et respectivement l'entrée et la sortie à une température moindre, comportant un moyen de ralentissement du débit du verre en fusion dans la boucle de recirculation primaire propre à raccourcir son étendue.

La réduction de la longueur de la boucle de recirculation primaire permet, pour une même longueur de four, de prolonger la zone d'affinage L de sorte d'améliorer la qualité du verre.

L'augmentation de la tirée d'un four donné conduit à une prolongation de la boucle B1. L'invention permet de réduire cette prolongation de sorte de conserver la durée d'affinage du verre.

Selon un exemple de réalisation, qui ne fait pas partie de l'invention, le moyen de ralentissement du débit dans la boucle de recirculation primaire B1 comprend une réduction de la profondeur moyenne de la cuve dans la zone de la boucle de recirculation B1 par rapport à celle dans la zone de résurgence centrale du verre.

Selon un autre exemple de réalisation, qui ne fait pas partie de l'invention, le moyen de ralentissement du débit dans la boucle de recirculation primaire B1 peut comprendre un moyen d'apport calorifique au verre de retour circulant au niveau de la sole.

Selon l'invention, le moyen de ralentissement du débit dans la boucle de recirculation primaire comprend une inclinaison de la sole sensiblement depuis l'entrée vers l'intérieur du four, sur une distance correspondant à 20-100%, et de préférence 50%, de la longueur de la boucle de recirculation primaire représenté par la longueur C, de sorte que la profondeur de la sole augmente depuis l'entrée du four vers l'intérieur. La distance de 50% correspond sensiblement à l'étendue du tapis.

La diminution de la profondeur (h) de la sole depuis l'intérieur du four vers l'entrée des matières premières est réalisée de manière discontinue, en particulier avec des marches successives, de hauteur réduite, notamment inférieure à 25 cm.

Lorsque la variation de profondeur est obtenue par des marches, celles-ci peuvent être chanfreinées.

Dans une variante, qui ne fait pas partie de l'invention, la diminution de la profondeur de la sole depuis l'intérieur du four vers l'entrée des matières premières peut être continue, selon un plan incliné.

Avantageusement, le moyen de ralentissement est constitué par une inclinaison, par marches de la sole sensiblement depuis l'entrée vers l'intérieur du four sur une distance correspondant sensiblement à l'étendue du tapis.

Selon une autre variante, qui ne fait pas partie de l'invention la diminution de la profondeur de la sole depuis l'intérieur du four vers l'entrée des matières premières est obtenue par la présence d'un ou plusieurs obstacles placés sur la sole, notamment une ou plusieurs saillies transversales.

Un chauffage électrique avec des électrodes classiques est avantageusement prévu dans le bain de verre en fusion sous le tapis.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :

Fig. 1 est une coupe schématique verticale d'un four de verre flotté classique.

Fig. 2 est une coupe verticale schématique partielle du tapis et du bain de fusion pour l'établissement d'un bilan thermique local simplifié,

Fig. 3 est une coupe verticale schématique partielle d'un four selon l'invention.

Fig. 4 est une coupe verticale schématique partielle d'une variante de four

et

Fig. 5 est une coupe verticale schématique partielle d'un four représentant une nouvelle variante comprenant un apport calorifique par des électrodes au verre de retour.

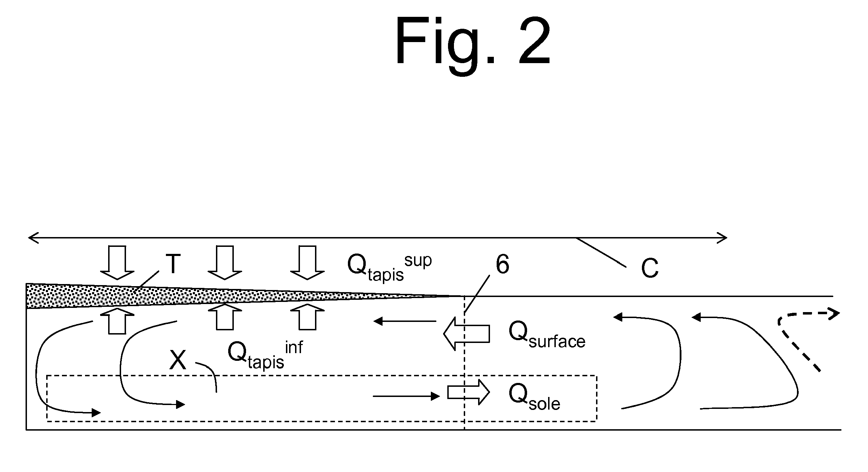

D'après le schéma de Fig. 2, il apparait que l'énergie totale $Q_{tapis}$ pour la fusion du tapis T est apportée :

- soit directement à la surface supérieure du tapis par le rayonnement de la combustion, sous la forme $Q_{tapis}^{sup}$,
- soit indirectement par conduction et convection du verre sous la surface inférieure du tapis selon l'expression $Q_{tapis}^{inf}$

d'où la relation : $Q_{tapis} = Q_{tapis}^{sup} + Q_{tapis}^{inf}$

Le rapport $Q_{tapis}^{inf}/Q_{tapis}$ est difficile à déterminer, aussi bien par mesure que par modélisation, mais il est plutôt inférieur à 50 %.

L'apport de chaleur à la face inférieure du tapis est donné par conduction et convection et cause le refroidissement du verre sous le tapis. Le verre en surface amène une certaine quantité de chaleur qui est ensuite consommée par la face inférieure du tapis.

Entre consommation par le tapis et apport de chaleur par recirculation du verre, il existe un équilibre pour respecter la conservation des flux thermiques

$$Q_{tapis}^{inf} = \Delta Q_{rec},$$

relation dans laquelle $\Delta Q_{rec}$ est égal à la perte d'énergie du verre. Cette perte d'énergie correspond à la différence d'énergie du verre qui, par suite de la recirculation, entre dans, puis sort d'une zone du bain située sous le tapis T. Cette zone sous le tapis prise en compte pour notre bilan thermique local simplifié est délimitée par une limite fictive 6. Evidemment, il convient de prendre également en compte les pertes thermiques des parois dans le bilan thermique de la zone délimitée. Le verre proche de la surface franchit la limite 6 de la droite vers la gauche selon Fig. 2 en ayant une énergie $Q_{surface}$. Il se refroidit sous le tapis T, pour ensuite descendre vers la sole et ressortir de la gauche vers la droite avec une énergie $Q_{sole}$.

On peut ainsi écrire :

$$\Delta Q_{rec} = Q_{surface} - Q_{sole}$$

Avec ;

$Q_{surface}$ égal à l'énergie du verre entrant dans la zone située sous le tapis T

$Q_{sole}$ égal à l'énergie du verre sortant de cette zone, la différence correspondant à la chute de la température du verre en recirculation.

Cette différence d'énergie peut également être exprimée par la relation

$$\Delta Q_{rec} = \dot{m} \cdot c_p \cdot \Delta T$$

Avec:

- $\dot{m}$ correspond au débit massique du verre dans la boucle de recirculation primaire B1,
- $c_p$ correspond à la capacité calorifique ou chaleur spécifique du verre,
- $\Delta T$ = différence de température entre le courant entrant et sortant dans la zone sous le tapis.

Les quantités exactes des flux thermiques du verre par convection sont en principe à calculer à partir des intégrations des profils d'écoulement et des champs de températures dans le plan de la limite fictive 6 - ce qui n'est pas représenté ici pour conserver la clarté de la description.

Le débit de verre issu de la fusion du tapis étant faible comparé au débit de recirculation, il est négligé par la suite de sorte de simplifier la description.

Selon l'invention, on diminue le débit $\dot{m}$ par un moyen de ralentissement de la recirculation du verre.

On peut réécrire la formule précédente sous la forme :

$$\dot{m} = \Delta Q_{rec} / c_p \cdot \Delta T$$

Cette formule montre qu'une diminution du débit de recirculation par un moyen de ralentissement géométrique de l'écoulement selon l'invention peut avoir deux conséquences :

- La valeur de $\Delta Q_{rec}$ diminue ce qui conduit à une diminution de la vitesse du verre sous le tapis ce qui conduit à une réduction du flux thermique $Q_{tapis}^{inf}$,

- La valeur $\Delta T$ augmente ce qui conduit sous le tapis à une diminution de la température du verre qui plonge vers la sole.

En pratique, ces deux phénomènes se combinent également avec le mécanisme de transfert de chaleur dans le tapis pour conduire à la nouvelle valeur $Q_{tapis}^{inf}$.

Une description détaillée de la complexité de la fusion d'un tapis figure par exemple dans le livre « Mathematical simulation in glass technology », Springer 2002, Eds, D.Krause, H.Loch, au chapitre 2.2, pages 73-125. Une description simplifiée de ces phénomènes est développée ci-dessous.

La quantité d'énergie $Q_{tapis}^{inf}$ consommée par la face inférieure du tapis T dépend, de manière complexe, du flux thermique par conduction et convection du verre directement en-dessous du tapis. On ne connaît pas a priori la contribution de la convection par rapport à la conduction. La conduction thermique du verre peut être représentée par une conduction effective selon l'approximation Rosseland qui intègre la contribution du rayonnement dans la conduction. Le verre clair et notamment ultra-clair présentent des valeurs très élevées de cette conduction effective et donc un flux thermique élevé en présence de gradients thermiques. Il est donc nécessaire de vérifier si la convection du verre joue encore un rôle important dans le transfert d'énergie sous le tapis.

L'intensité de la convection peut être exprimée par le nombre de Péclet Pe, qui représente le rapport entre flux thermique par convection et flux par conduction:

$$Pe = v \cdot L_{car}/\alpha$$

v désigne la vitesse moyenne du courant du verre entrant sous le tapis T, et $L_{car}$ désigne une longueur caractéristique du système en l'occurrence la longueur du courant de verre parcourue sous le tapis.

$\alpha$ désigne la diffusivité thermique qui est proportionnelle à la conductivité ($\alpha$= conductivité effective / densité $\times$ $c_p$) et dépend du matériau, en l'occurrence du verre et est élevé pour le verre clair ou ultra-clair. Il n'est guère possible d'agir sur ce paramètre.

En principe, il est nécessaire de formuler le nombre de Péclet en 2 dimensions pour comparer des flux de convection et de conduction perpendiculaires tels que sous le tapis - ce qui n'est pas représenté ici pour conserver la clarté de la description.

Pour les paramètres et dimensions typiques des grands fours verriers tels que les fours de verre flotté on trouve des valeurs de Péclet en une dimension largement supérieurs à 10. Pour le verre clair ou ultra-clair, la convection de la boucle de recirculation joue donc toujours un rôle dominant pour le transport de chaleur sous la face inférieure du tapis.

Une légère diminution du débit de recirculation, et donc de la vitesse, ne change pas le mode de transfert de chaleur sous le tapis qui reste dominé par la convection. Néanmoins, une diminution du débit de recirculation diminue le flux de chaleur dans le tapis $Q_{tapis}^{inf}$. Nous comprenons à présent qu'une diminution du débit de recirculation et de la vitesse sous le tapis diminue à la fois la valeur de $Q_{tapis}^{inf}$ et de l'apport par recirculation $\Delta Q_{rec}$. Le bilan thermique est ainsi respecté.

Une diminution de $Q_{tapis}^{inf}$ entraîne une prolongation du tapis plus ou moins importante.

Il est nécessaire de compenser toute diminution d'apport calorifique sur la face inférieure $Q_{tapis}^{inf}$ par une augmentation de celui-ci sur la face supérieure $Q_{tapis}^{sup}$ pour conserver l'énergie totale $Q_{tapis}$ nécessaire pour la fusion du tapis. Une adaptation de la distribution de la puissance des brûleurs pourra être prévue pour renforcer le flux thermique sur la face supérieure $Q_{tapis}^{sup}$. Ce renforcement du flux thermique pourra être réalisé par d'autres moyens comme l'oxy-boosting ou des flammes verticales impactantes. Selon l'invention, le four comporte un moyen de ralentissement du débit de la boucle de recirculation primaire. Les deux boucles de recirculation du verre B1 et B2 sont en compétition hydrodynamique. La position de la zone de séparation entre les deux boucles dépend du rapport de leurs intensités. Une diminution de l'intensité de la boucle B1 conduit à un déplacement de la zone de séparation vers l'entrée du four et donc une réduction de l'étendue de la longueur C. Dans le cas d'un four à coulée continue, l'écoulement principal du verre crée une zone de résurgence centrale RC intercalée dans la zone de séparation entre les deux boucles de recirculation B1 et B2. La réduction de la boucle B1 conduit à un décalage vers l'entrée du four de la zone de résurgence RC. Après la zone de résurgence, l'écoulement principal suit la trajectoire 4. Dans la première partie de cette trajectoire 4 est réalisé l'affinage du verre. Si on maintient la température de l'affinage sur une longueur L prolongée correspondant au décalage de la position de la résurgence RC, cela conduit à prolonger la zone d'affinage d'où une meilleure qualité du verre.

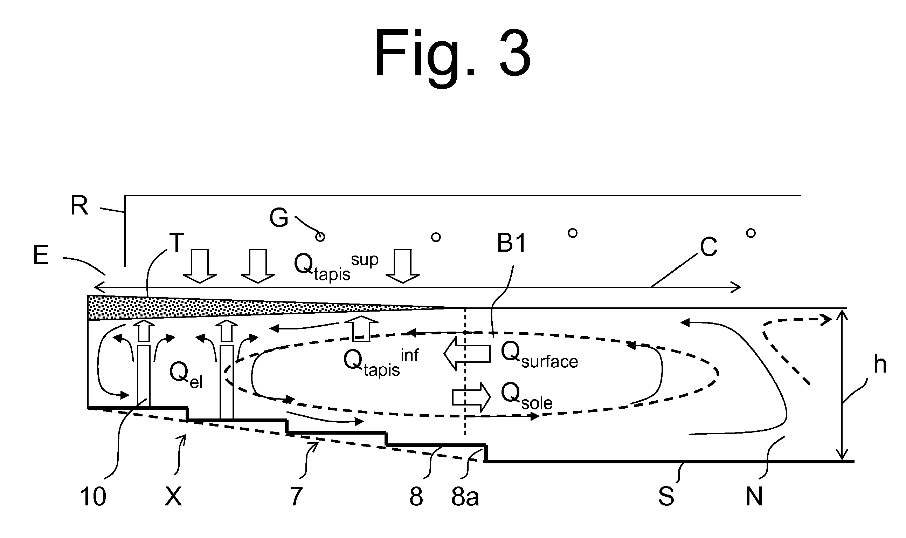

Préférentiellement, le moyen de ralentissement du débit de la boucle de recirculation primaire est constitué par une diminution de la profondeur obtenue par des marches successives ou qui peut être réalisée par gradins à l'aide de plusieurs marches 8 de faible hauteur, généralement de hauteur inférieure à 25 cm (Fig.3).

Selon un autre exemple de réalisation qui ne fait pas partie de l'invention visible sur Fig. 3, la sole 7 est inclinée de manière continue du haut vers le bas depuis l'entrée E jusqu'à une zone située environ à la verticale de l'extrémité du tapis T.

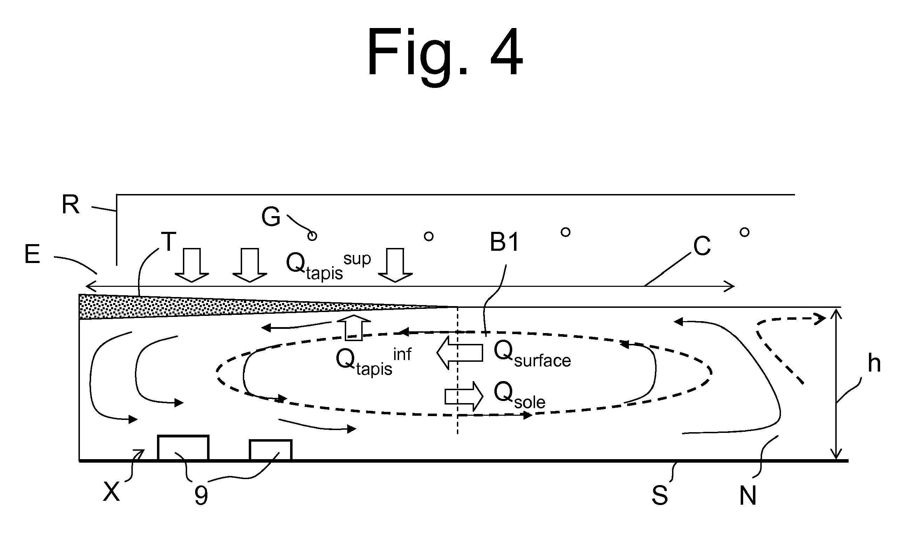

Selon un autre exemple de réalisation qui ne fait pas partie de l'invention visible sur Fig. 4, la sole reste horizontale jusqu'au-dessous de l'entrée et comprend une ou plusieurs saillies verticales 9, par exemple sur toute sa largeur. De préférence, les saillies 9 sont positionnées sous le tapis. Il est néanmoins nécessaire de veiller à ne pas créer de zone morte ou trop froide dans le verre pour éviter des problèmes éventuels de qualité.

Les marches 8 peuvent être éventuellement chanfreinées au niveau de leur nez 8a pour réduire l'effet de la corrosion sur les marches. Une corrosion des marches ne peut pas nuire à la qualité car le verre en contact avec la sole dans cette zone est ensuite forcé à remonter dans la zone d'affinage par la résurgence centrale.

Dans le cas du verre ultra-clair, il est habituel de réduire le taux d'isolation thermique de la sole de sorte de réduire la température de la sole. La mise en oeuvre selon l'invention d'un frein géométrique conduit également à une augmentation plus ou moins importante du $\Delta T$, donc à une diminution de la température de la sole. La combinaison d'une moindre isolation et d'un frein géométrique diminue notablement le risque de corrosion des réfractaires de la sole.

Si la diminution de l'apport de chaleur sur la face inférieure du tapis $Q_{tapis}^{inf}$ s'avère importante, et si un complément à la face supérieure n'est pas suffisant pour compenser, le tapis risque de se prolonger au-delà de la zone souhaitée.

Dans ce cas, un apport calorifique doit être réalisé sur la face inférieure du tapis, notamment par des électrodes classiques 10, de sorte de renforcer l'échange thermique en face inférieure du tapis. Selon l'invention, l'apport calorifique des électrodes 10 vient principalement compléter celui apporté par la convection du verre de sorte de maintenir la valeur de $Q_{tapis}^{inf}$.

Le renforcement électrique de chauffage réalisé avec des électrodes 10 servira dans ce cas à compléter l'apport de chaleur sur la face inférieure.

$$Q_{tapis}^{inf} = \Delta Q_{rec} + Q_{el}$$

L'apport d'énergie par le boosting électrique directement sous le tapis permet donc de limiter une prolongation du tapis.

Avantageusement, on prévoit dans le four, à proximité de l'enfournement E, par exemple au niveau des premières marches 8, un chauffage électrique ou « boosting » de renforcement avec au moins deux électrodes 10 implantées verticalement sur deux marches de la sole. Le courant électrique circule d'une électrode à l'autre dans le verre en fusion et provoque son échauffement. Un écoulement local s'établit autour des électrodes. Il a pour effet de renforcer l'échange thermique avec le tapis. L'écoulement global de la boucle de recirculation B1 reste dominant sous le tapis.

Selon l'invention, la sole inclinée, notamment avec des marches multiples 8, permet :

- une sole maîtrisable en construction et lors de l'attrempage par le maintien de la liaison mécanique directe des blocs réfractaires pour exercer une poussée horizontale nécessaire à la fermeture des joints,
- peu de risques de corrosion.

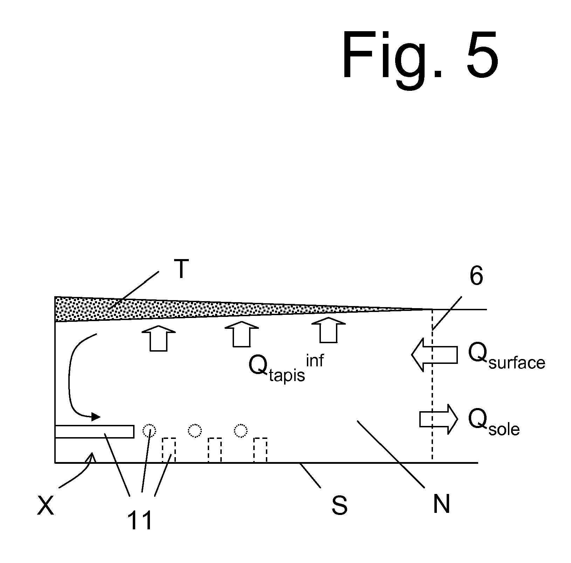

La Fig.5 représente un autre exemple basé sur un nouvel équilibre du bilan thermique de la boucle B1.

Il est caractérisé en ce que le ralentissement du débit dans la boucle de recirculation primaire est obtenu par un apport calorifique au verre de retour circulant au niveau de la sole.

L'apport calorifique selon cette variante de réalisation est avantageusement combiné à une diminution de la profondeur de la sole.

La recirculation de la boucle B1 est engendrée par la convection naturelle, ou thermoconvection, liée à un différentiel entre la température moyenne du verre sous le tapis et celle dans la zone de résurgence R1.

Si on rehausse la température du verre après son refroidissement par le tapis, par un apport calorifique localisé, on diminue le différentiel de température et donc le moteur de la boucle de recirculation B1.

La température du verre à la sole intervient donc sur la compétition hydrodynamique des deux boucles de recirculation B1 et B2 et la position de la résurgence centrale RC. Ainsi, un verre plus chaud à la sole permet de diminuer l'étendue de la boucle de recirculation B1.

La diminution du débit de recirculation ne peut être obtenue que si la diminution de la viscosité du verre, par l'augmentation de la température du courant de retour, reste faible et influe peu sur la résistance par friction à l'écoulement du verre. Pour du verre ultra-clair et l'élévation de température visée, la variation de viscosité du verre est relativement faible ce qui permet effectivement de réduire le débit de recirculation B1.

Comme représenté en Fig.5, l'apport calorifique est localisé dans le verre de retour au-dessus de la sole.

L'apport calorifique peut être réalisé, notamment, par des électrodes 11 implantées horizontalement. Elles peuvent également être implantées verticalement mais avec une hauteur limitée.

Lors de l'implantation des électrodes, il faut veiller à ne pas créer des points chauds dans le verre de sorte d'éviter de créer une thermoconvection verticale trop intense, en ayant une bonne répartition du champ électrique des électrodes.

Avantageusement, l'apport calorifique selon l'invention est d'environ 10% de l'énergie de recirculation $\Delta Q_{rec}$ correspondant également à la consommation d'énergie du tapis sur sa face inférieure.

Pour un four de verre flotté d'une tirée de 400 t/j, l'apport calorifique sera ainsi d'environ 0.5 MW. Il sera réparti sur une dizaine d'électrodes.

Cette solution est notamment intéressante si la sole est constituée de réfractaires ayant une très bonne résistance à la corrosion en raison de la légère augmentation de la température de la sole.

En cas d'affaiblissement du transfert de chaleur

$Q_{tapis}^{inf}$ lié à la réduction de la boucle de recirculation, l'apport calorifique est renforcé sur la face supérieure du tapis de sorte de maintenir la longueur du tapis.

La hauteur h moyenne de verre sous la première boucle de recirculation peut être inférieure d'au moins 5% par rapport à celle dans la zone de résurgence RC du verre.

Le chauffage électrique avec électrodes 10 est prévu dans le bain de verre de sorte de renforcer l'échange thermique en face inférieure du tapis et/ou un apport calorifique supplémentaire est prévu en face supérieure du tapis T.

La solution de l'invention présente, pour du verre ordinaire ou clair, mais notamment ultra-clair :

- une diminution du débit de recirculation de la boucle primaire B1;
- une réduction de l'étendue C de la ladite boucle en faveur de la boucle secondaire B2 ;
- un maintien ou une prolongation du temps d'affinage dans la boucle secondaire B2.

**Revendications**

1. Four de verre pour le chauffage et la fusion de matières à vitrifier, comprenant :

   - une entrée (E) pour les matières premières,
   - une superstructure (R) équipée de moyens de chauffage (G),
   - une cuve (M) contenant un bain de verre en fusion sur lequel un tapis (T) de matières premières flotte depuis l'entrée jusqu'à une certaine distance à l'intérieur du four,
   - une sortie (Y) par laquelle est évacué le verre en fusion,

   le four, la cuve, l'entrée, la sortie et les moyens de chauffage étant configurés pour que deux boucles (B1, B2) de recirculation du verre en fusion, respectivement primaire et secondaire, se forment dans le bain (N) entre une zone centrale (I) du four plus chaude et respectivement l'entrée (E) et la sortie (Y) à une température moindre,
   le four comportant un moyen de ralentissement (X) du débit du verre en fusion dans la boucle de recirculation primaire (B1) propre à raccourcir son étendue (C), le moyen de ralentissement présentant une inclinaison (7) de la sole (S) sensiblement depuis l'entrée (E) vers l'intérieur du four, sur une distance correspondant à 20-100% et de préférence 50% de l'étendue (C) de la boucle de recirculation primaire (B1), de sorte que la profondeur de la sole augmente depuis l'entrée du four vers l'intérieur, **caractérisé en ce que** la réduction de la profondeur moyenne (h) est réalisée de manière discontinue.

2. Four selon la revendication 1, **caractérisé en ce que** l'inclinaison de la sole (S) est réalisée avec des marches successives.

3. Four selon la revendication 2, **caractérisé en ce que** la hauteur des marches (8) est inférieure à 25 cm.

4. Four selon la revendication 2 ou 3, **caractérisé en ce que** les marches (8) sont chanfreinées à leur nez (8a).

5. Four selon l'une quelconque des revendications précédentes, **caractérisé en ce que** la hauteur (h) moyenne de verre sous la première boucle de recirculation est inférieure d'au moins 5% par rapport à celle dans la zone de résurgence (RC) du verre.

6. Four selon l'une quelconque des revendications 1 à 5, **caractérisé en ce qu'**un chauffage électrique avec électrodes (10) est prévu dans le bain de verre de sorte de renforcer l'échange thermique en face inférieure du tapis et/ou un apport calorifique supplémentaire est prévu en face supérieure du tapis (T).

7. Utilisation d'un four de verre pour le chauffage et la fusion de matières à vitrifier, le four comprenant :

   - une entrée (E) pour les matières premières,
   - une superstructure (R) équipée de moyens de chauffage (G),
   - une cuve (M) contenant un bain de verre en fusion sur lequel un tapis (T) de matières premières flotte depuis l'entrée jusqu'à une certaine distance à l'intérieur du four,
   - une sortie (Y) par laquelle est évacué le verre en fusion,

   le four, la cuve, l'entrée, la sortie et les moyens de chauffage étant configurés pour que deux boucles (B1, B2) de recirculation du verre en fusion se forment dans le bain (N) entre une zone centrale (I) du four plus chaude et respectivement l'entrée (E) et la sortie (Y) à une température moindre, **caractérisée en ce que** l'utilisation comporte un ralentissement (X) du débit du verre en fusion dans la boucle de recirculation primaire (B1) propre à raccourcir son étendue (C).

**Patentansprüche**

1. Glasofen für das Erhitzen und das Schmelzen von zu verglasenden Materialien, umfassend:

   - einen Einlass (E) für die Rohstoffe,
   - einen Aufbau (R), der mit Heizmitteln (G) ausgestattet ist,

- eine Wanne (M), die ein Bad aus geschmolzenem Glas enthält, auf dem ein Teppich (T) aus Rohstoffen von dem Einlass bis zu einer gewissen Strecke innerhalb des Ofens treibt,
- einen Auslass (Y), über den das geschmolzene Glas ausgetragen wird,

wobei der Ofen, die Wanne, der Einlass, der Auslass und die Heizmittel so gestaltet sind, dass sich zwei Schleifen (B1, B2) zur Rückführung des geschmolzenen Glases, eine primäre bzw. eine sekundäre, in dem Bad (N) zwischen einem heißeren mittleren Bereich (I) des Ofens und dem Einlass (E) bzw. dem Auslass (Y) mit einer geringeren Temperatur bilden, wobei der Ofen ein Mittel zur Verlangsamung (X) des Durchsatzes des geschmolzenen Glases in der primären Rückführungsschleife (B1) umfasst, das geeignet ist, deren Ausdehnung (C) zu verkürzen, wobei das Verlangsamungsmittel eine Neigung (7) der Sohle (S) im Wesentlichen vom Einlass (E) zum Inneren des Ofens, über eine Strecke, die 20 bis 100 % und vorzugsweise 50 % der Ausdehnung (C) der primären Rückführungsschleife (B1) entspricht, aufweist, so dass die Tiefe der Sohle vom Einlass des Ofens zum Inneren hin zunimmt, **dadurch gekennzeichnet, dass** die Verringerung der durchschnittlichen Tiefe (h) diskontinuierlich erfolgt.

**2.** Ofen nach Anspruch 1, **dadurch gekennzeichnet, dass** die Neigung der Sohle (S) mit aufeinanderfolgenden Stufen ausgeführt ist.

**3.** Ofen nach Anspruch 2, **dadurch gekennzeichnet, dass** die Höhe der Stufen (8) weniger als 25 cm beträgt.

**4.** Ofen nach Anspruch 2 oder 3, **dadurch gekennzeichnet, dass** die Stufen (8) an ihrer Nase (8a) gefast sind.

**5.** Ofen nach einem der vorhergehenden Ansprüche, **dadurch gekennzeichnet, dass** die durchschnittliche Glashöhe (h) unter der ersten Rückführungsschleife gegenüber derjenigen im Auftriebsbereich (RC) des Glases um wenigstens 5 % geringer ist.

**6.** Ofen nach einem der Ansprüche 1 bis 5, **dadurch gekennzeichnet, dass** ein elektrisches Erhitzen mit Elektroden (10) in dem Glasbad vorgesehen ist, um den Wärmeaustausch an der Unterseite des Teppichs zu verstärken, und/oder eine zusätzliche Wärmezufuhr an der Oberseite des Teppichs (T) vorgesehen ist.

**7.** Verwendung eines Glasofens zum Erhitzen und Schmelzen von zu verglasenden Materialien, wobei der Ofen umfasst:

- einen Einlass (E) für die Rohstoffe,
- einen Aufbau (R), der mit Heizmitteln (G) ausgestattet ist,
- eine Wanne (M), die ein Bad aus geschmolzenem Glas enthält, auf dem ein Teppich (T) aus Rohstoffen von dem Einlass bis zu einer gewissen Strecke innerhalb des Ofens treibt,
- einen Auslass (Y), über den das geschmolzene Glas ausgetragen wird,

wobei der Ofen, die Wanne, der Einlass, der Auslass und die Heizmittel so gestaltet sind, dass sich zwei Schleifen (B1, B2) zur Rückführung des geschmolzenen Glases in dem Bad (N) zwischen einem heißeren mittleren Bereich (I) des Ofens und dem Einlass (E) bzw. dem Auslass (Y) mit einer geringeren Temperatur bilden, **dadurch gekennzeichnet, dass** die Verwendung eine Verlangsamung (X) des Durchsatzes des geschmolzenen Glases in der primären Rückführungsschleife (B1) umfasst, die geeignet ist, deren Ausdehnung (C) zu verkürzen.

**Claims**

**1.** A glass furnace for heating and melting materials to be vitrified, comprising:

- an inlet (E) for the raw materials,
- a superstructure (R) provided with heating means (G),
- a tank (M) containing a bath of molten glass on which a blanket (T) of raw materials floats from the inlet to a point a certain distance away inside the furnace,
- an outlet (Y) through which the molten glass is discharged,

the furnace, the tank, the oulet and the heating means being configured such that two molten glass recirculation loops (B1, B2), respectively primary and secondary, are formed in the bath (N) between a hotter central region (I) of the furnace and, respectively, the inlet (E) and the outlet (Y), which are at a lower temperature, the furnace including a means (X) for slowing the flow rate of the molten glass in the primary recirculation loop (B1), the means for slowing the flow rate in the primary recirculation loop comprises an inclination (7) of the floor (S) extending substantially from the inlet (E) toward the interior of the furnace, over a distance of 20-100%, and preferably 50%, of the extent (C) of the recirculation loop (B1), in such a way that the depth of the floor increases from the furnace inlet toward the interior, **characterized in that** the reduction in the mean depth (h) is provided in a discontinuous way.

2. The furnace as claimed in claim 1, **characterized in that** the inclination of the floor (S) is provided by means of successive steps.

3. The furnace as claimed in claim 2, **characterized in that** the height of each step (8) is less than 25 cm.

4. The furnace as claimed in claim 2 or 3, **characterized in that** the nosings (8a) of the steps (8) are chamfered.

5. The furnace as claimed in any of the preceding claims, **characterized in that** the mean depth (h) of glass under the first recirculation loop is at least 5% smaller than the depth in the upward flow region (RC) of the glass.

6. The furnace as claimed in any of claims 1 to 5, **characterized in that** electrical heating using electrodes (10) is provided in the glass bath in order to reinforce the heat exchange on the lower surface of the blanket, and/or a supplementary heat supply is provided on the upper surface of the blanket (T).

7. Use of a glass furnace for heating and melting materials to be vitrified, the glass comprising:

    - an inlet (E) for the raw materials,
    - a superstructure (R) provided with heating means (G),
    - a tank (M) containing a bath of molten glass on which a blanket (T) of raw materials floats from the inlet to a point a certain distance away inside the furnace,
    - an outlet (Y) through which the molten glass is discharged,

    the furnace, the tank, the oulet and the heating means being configured such that two molten glass recirculation loops (B1, B2) are formed in the bath (N) between a hotter central region (I) of the furnace and, respectively, the inlet (E) and the outlet (Y), which are at a lower temperature,
    **characterized in that** the use includes a means (X) for slowing the flow rate of the molten glass in the primary recirculation loop (B1), this means being adapted to reduce the extent (C) of this loop.

# Fig. 1

EP 2 483 211 B1

# Fig. 2

# Fig. 3

EP 2 483 211 B1

# Fig. 4

Fig. 5

## RÉFÉRENCES CITÉES DANS LA DESCRIPTION

**Documents brevets cités dans la description**

- US 1870242 A
- US 2119948 A
- LU 77649 A

**Littérature non-brevet citée dans la description**

- Mathematical simulation in glass technology. Springer, 2002, 73-125